# EUROPEAN PATENT APPLICATION

(11) **EP 4 836 117 A2**
(43) Date of publication of application: **04.11.2026**
(21) Application number: 26206048.6
(22) Date of filing: 04.08.2021
(51) Int. Cl.: H01M 50/20

(54) **BATTERY APPARATUS**

(30) Priority: 27.05.2021 CN 202110585585
(62) Document number(s) of the earlier application(s) in accordance with Art. 76 EPC: 21189544.6 / 4 095 988
(71) Applicant: CALB Group Co., Ltd., Changzhou City, Jiangsu Province (CN); CALB Technology Co., Ltd., Changzhou City, Jiangsu Province (CN)
(72) Inventor: NIU, Li, Changzhou City (CN); LI, Xinjian, Changzhou City (CN); ZHANG, Xuan, Changzhou City (CN); SUN, Guohua, Changzhou City (CN); LI, Zhouli, Changzhou City (CN); GUO, Qixin, Changzhou City (CN); WANG, Hao, Changzhou City (CN)
(74) Representative: Murgitroyd & Company

(57) **Abstract**

A battery apparatus includes at least two battery units (110). Each of the battery units (110) includes at least two batteries (111). A heat insulating pad (200) is disposed between largest surfaces of the batteries (111) of each of the adjacent two battery units (110), and at least a pair of the adjacent two batteries (111) belonging to a same battery unit (110) contact each other with largest surfaces of the batteries (111). A thickness of each of the heat insulating pads (200) is at least 3 mm, when thermal runaway occurs in a battery (111), the temperature of an adjacent battery (111) after heat insulation by the heat insulating pad (200) is less than 250°C.

## Description

### BACKGROUND

### Technical Field

The disclosure relates a technology field of batteries, and in particular, relates to a battery apparatus.

### Description of Related Art

In the structure of a conventional battery apparatus, the space in the length direction is limited, and the matched battery size is standardized. After deducting the battery thickness from the length space, the remaining space is limited. Moreover, the expansion space required by the respiratory effect of batteries is also required to be taken into account, and as such, the space designed for the heat insulating pads is very limited. However, when thermal runaway occurs in one battery in the battery apparatus, the generated heat may only be suppressed by the thermal suppression effect provided by a heat insulating pad with sufficient thickness. In the conventional battery apparatus since a heat insulating space is adopted for the design of heat insulation between single strings, a poor thermal suppression effect is provided in the battery apparatus, and the risk of heat diffusion therefore rises.

WO 2020/180114 A1 discloses a battery module including a cell stack comprising a plurality of battery cells and at least one pad composite interposed between adjacent battery cells, and a module case for receiving the cell stack. The pad composite comprises a pair of swelling absorption pads which are compressed according to the volume expansion of the battery cells as a result of swelling, and a heat shielding pad which is interposed between the pair of swelling absorption pads and blocks heat transfer between adjacent battery cells. The heat shielding pad expands at a predetermined reference temperature or higher.

CN 208 368 682 U discloses a high efficiency and heat radiation lithium battery group, including a cabinet, and several heat sinks in the cabinet. The cabinet is divided into several placing grooves for being used to place battery cell in parallel by the heat sink. A heat-conducting silica gel sheet is equipped between the heat sink and battery cell, and the two sides of heat-conducting silica gel sheet is bonded with heat sink and battery core respectively. The heat sink has heat conductive passage inside, and cooling medium is disposed within the heat conductive passage.

CN 210 576 081 U discloses a battery pack thermal runaway protector and a battery pack using the same. The battery pack thermal runaway protector comprises a heat insulation part, a first heating part and a second heating part. The first heating part is arranged on one side of the heat insulation part, and the second heating part is arranged on the other side of the heat insulation part. A first heating mechanism is arranged in the first heating part, and a second heating mechanism is arranged in the second heating part.

### SUMMARY

The disclosure provides a battery apparatus.

According to an aspect of the disclosure, a battery apparatus is provided. The battery apparatus includes at least two battery units. Each of the battery units includes at least two batteries. A heat insulating pad is disposed between largest surfaces of each of the adjacent battery units, and at least a pair of the adjacent two batteries belonging to the same battery unit contact each other with largest surfaces of the batteries. A thickness of the heat insulating pad is greater than 3 mm. When thermal runaway occurs in a battery, the temperature of an adjacent battery after heat insulation by the heat insulating pad is less than 250°C.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating a partial structure of a battery apparatus according to an exemplary embodiment of the disclosure.
FIG. 2 is a schematic view of a structure of a heat insulating pad of the battery apparatus in FIG. 1.
FIG. 3 is a schematic view illustrating a partial structure of a battery apparatus according to another exemplary embodiment of the disclosure.
FIG. 4 is a schematic view illustrating a partial structure of a battery apparatus according to another exemplary embodiment of the disclosure.
FIG. 5 is a schematic view illustrating a partial structure of a battery apparatus according to another exemplary embodiment of the disclosure.
FIG. 6 is a schematic view illustrating a partial structure of a battery apparatus according to another exemplary embodiment of the disclosure.
FIG. 7 is a schematic view illustrating a partial structure of a battery apparatus according to another exemplary embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

### First embodiment

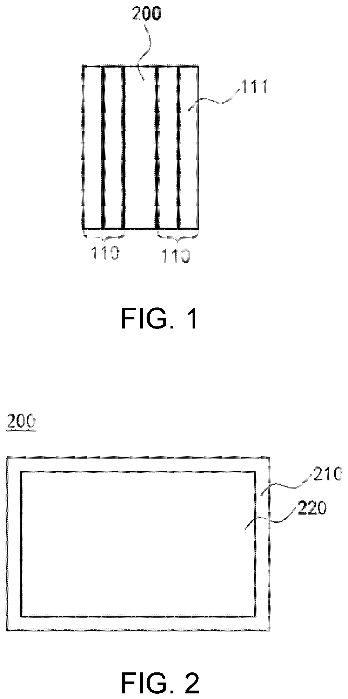

With reference to FIG. 1, FIG. 1 representatively shows a schematic view illustrating a partial structure of a battery apparatus provided by the disclosure, and specifically shows battery units 110 and a heat insulating pad 200 of the battery apparatus. In this exemplary embodiment, the battery pack applied to an electric car is treated as an example of the battery apparatus provided by the disclosure. A person having ordinary skill in the art should easily understand that, in order to apply the relevant design of the disclosure to other types of battery packs or to other application scenarios, various modifications, additions, substitutions, deletions, or other changes may be made to the following specific embodiments, and these changes still fall within the scope of the principle of the battery apparatus provided by the disclosure.

As shown in FIG. 1, in this embodiment, the battery apparatus provided by the disclosure includes the battery units 110 and the heat insulating pad 200. With reference to FIG. 2 together, FIG. 2 representatively shows a schematic view illustrating a structure of the heat insulating pad 200 through which principles of the disclosure may be implemented. Hereinafter, structures, connection manners, and functional relationships of main components of the battery apparatus provided by the disclosure are described in detail with reference to the above-mentioned figures.

As shown in FIG. 1, in this embodiment, the battery apparatus provided by the disclosure includes two battery units 110, and each of the battery units 110 includes two batteries 111. Based on the above, a heat insulating pad 200 is disposed between the adjacent two battery units 110. The adjacent two batteries 111 belonging to the same battery unit 110 contact each other with largest surfaces of their own. Through the foregoing design, under a condition of having a same battery module space, a sufficient installation space is provided for the heat insulating pad between the battery units provided by the disclosure. That is, a thickness of the heat insulating pad is relatively large, such that thermal runaway which may lead to battery safety risks is prevented from occurring in batteries in the adjacent two battery units. Meanwhile, the safety risk of batteries resulted from generation of a large expansion force caused by direct contact among all batteries in the battery units is also prevented from occurring.

It should be noted that, in other embodiments, the battery apparatus provided by the disclosure may include three or more battery units 110, and each of the battery units 110 may include three or more batteries 111. In other words, in various embodiments compliant with the design concept of the disclosure, the battery apparatus includes at least two battery units 110, and each of the battery units 110 includes at least two batteries 111. Based on the above, the heat insulating pad 200 is provided between the adjacent two battery units 110, and at least a pair of the adjacent two batteries 111 belonging to the same battery unit 110 contact each other with the largest surfaces of their own.

It should be noted that, when each of the battery units 110 includes three or more batteries 111, all of the adjacent batteries 111 in the battery unit 110 contact each other with the largest surfaces of their own. In other embodiments, when each of the battery units 110 includes three or more batteries 111, at least two of the adjacent batteries 111 contact each other with the largest surfaces of their own.

Optionally, as shown in FIG. 2, in this embodiment, the heat insulating pad 200 may include a buffering frame 210 and a heat insulating layer 220. To be specific, the buffering frame 210 includes a buffering material, and the buffering frame 210 has a frame-shaped structure, such as, but not limited to, a rectangular frame-shaped structure. The heat insulating layer 220 is disposed in the buffering frame 210. Through the foregoing design, the heat insulating pad 200 may achieve a balance between buffering and heat insulation.

Besides, based on the design that the heat insulating pad 200 includes the buffering frame 210 and the heat insulating layer 220, in this embodiment, the buffering material included in the buffering frame 210 may specifically include silica gel. Accordingly, silica gel is flexible, may be deformed when being subjected to a squeezing force, and may be recovered from such deformation when the squeezing force is removed, as such, the adoption of silica gel provides a favorable buffering effect on expansion and recovery from deformation generated by charging and discharging of the batteries 111 in the battery apparatus.

Moreover, based on the design that the heat insulating pad 200 includes the buffering frame 210 and the heat insulating layer 220, in this embodiment, a material of the heat insulating layer 220 may include aerogel. Accordingly, aerogel may effectively block heat transfer between the battery units 110 and exhibits an excellent thermal suppression effect, as such, the risk of battery thermal diffusion is lowered, and safety of the battery apparatus is further improved.

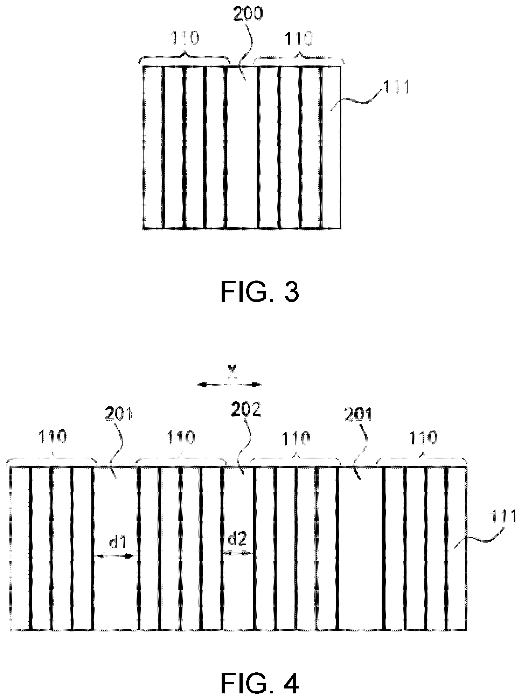

Optionally, as shown in FIG. 3, in this embodiment, at least two batteries 111 belonging to the same battery unit 110 may be parallel batteries, and all batteries 111 among the parallel batteries may contact each other with the largest surfaces of their own. Accordingly, since the battery units 110 in parallel are connected through a busbar that may quickly conduct heat, the risk of heat conduction through the busbar may be effectively reduced, heat diffusion is prevented from occurring, and safety of the battery apparatus is further improved.

Optionally, in any possible exemplary embodiment compliant with the design concept of the battery apparatus provided by the disclosure, the battery apparatus may include a battery module or a battery pack.

It should be noted that, compared to a conventional battery apparatus having a heat insulating pad that is disposed between every pair of adjacent two battery units, the heat insulating pad 200 in the disclosure is disposed only between the adjacent two battery units 110, and the adjacent two batteries 111 belonging to the same battery unit 110 contact each other with the largest surfaces of their own. Herein, a thickness of the heat insulating pad 200 may be greater than or equal to a base thickness. The base thickness satisfies a condition that "a temperature of any surface of opposite surfaces of the adjacent battery units 110 after being insulated by the heat insulating pad 200 is less than a critical temperature of thermal runaway generated by any surface of opposite surfaces of the adjacent battery units 110 when the surface is heated". Moreover, when the thickness of the heat insulating pad 200 is equal to the base thickness, the thickness of the heat insulating pad 200 is equivalent to a minimum thickness of the heat insulating pad required by the batteries disposed in the battery apparatus when thermal runaway occurs. In this way, the risk of battery heat diffusion is prevented from occurring, safety of the battery apparatus is improved, and production costs are further saved.

For instance, taking the 2P8S battery configuration adopted by the battery apparatus as an example, the disclosure adopts a design that one heat insulating pad is disposed between every two adjacent battery units, such that 16 batteries in the battery apparatus is able to be approximately divided into 4 heat insulating zones. Through the foregoing design, the number of the heat insulating pads is changed from 7 required by the conventional solution to 3. Also, according to the abovementioned condition, the thickness of a single heat insulating pad is changed from 1.58mm required by the conventional solution to 3.69mm. It is proved through experiments that after battery thermal runaway occurs in the battery apparatus, the temperature of largest surface is approximately 650°C to 750°C. A critical temperature T of thermal runaway generated when the largest surfaces of the batteries are heated is approximately 250°C, and the temperature of the largest surfaces is required to be less than 250°C after heat insulation is performed by the heat insulating pad. According to testing results of largest surfaces of heat insulating pads of different thicknesses heated at 650°C to 750°C, selection of a thickness of 3 mm for a heat insulating pad may allow the heat insulating pad to achieve a temperature of less than 250°C after performing heat insulation.

Regarding the specific selection of the thickness for a heat insulating pad, the temperature of thermal runaway generated when the largest surface of a battery is heated is related to a size, system, extension of tabs, and cell arrangement of the battery. Therefore, the temperature of the largest surface of the battery is not a fixed value after thermal runaway occurs, and the thickness of the heat insulating pad is proportional to the temperature of the largest surface of the battery after thermal runaway occurs. The thickness of the heat insulating pad is at least greater than the thickness of the heat insulating pad allowing the temperature of the largest surface of the battery in the adjacent zone to be less than the critical temperature of the thermal runaway. In order to improve space utilization of the module and reduce the number of batteries subjected to thermal runaway, under a condition of not changing a length of the battery apparatus, perform heat insulation based on zones, and in this way, the number of the heat insulating pads may be lowered and the thickness of the heat insulating pads may be further increased. Heat insulation and buffering are not provided in the heat insulating zones. As heat insulation is performed based on zones, the batteries in each of the heat insulating zones may be closely arranged. As the batteries in the zones are disposed to be in contact with each other, the thickness of the heat insulating pads is increased, and the heat insulating effect provided by the heat insulating pads is improved. In order to prevent an excessive number of batteries from being provided in each of the heat insulating zones, according to the limited space in the module, a minimum number of batteries are provided in the zone under the condition that the heat insulating effect of the heat insulating pads is satisfied.

### Second embodiment

Based on the detailed description of the battery apparatus of the first embodiment provided by the disclosure, description of the second embodiment provided by the disclosure is stated as follows with reference to FIG. 3. Herein, a battery apparatus in the second embodiment adopts a design similar to that adopted by the battery apparatus in the first embodiment, and a difference between the battery apparatus in the second embodiment and the battery apparatus in the first embodiment is specifically described as follows.

As shown in FIG. 3, in this embodiment, the battery apparatus provided by the disclosure includes two battery units 110, and each of the battery units 110 includes four batteries 111. Based on the above, a heat insulating pad 200 is disposed between the adjacent two battery units 110. The adjacent two batteries 111 belonging to the same battery unit 110 contact each other with largest surfaces of their own.

It should be noted that, in other embodiments, the battery apparatus provided by the disclosure may include three or more battery units 110, and each of the battery units 110 may include two, three, or five or more batteries 111. In other words, in various embodiments compliant with the design concept of the disclosure, the battery apparatus includes at least two battery units 110, and each of the battery units 110 includes at least two batteries 111.

### Third embodiment

Based on the detailed description of the battery apparatus of the first embodiment provided by the disclosure, description of the third embodiment provided by the disclosure is stated as follows with reference to FIG. 4. Herein, a battery apparatus in the third embodiment adopts a design similar to that adopted by the battery apparatus in the first embodiment, and a difference between the battery apparatus in the third embodiment and the battery apparatus in the first embodiment is specifically described as follows.

As shown in FIG. 4, in this embodiment, the battery apparatus provided by the disclosure includes four battery units 110, and each of the battery units 110 includes four batteries 111. Herein, a heat insulating pad is disposed between every adjacent two battery units 110, that is, a total of three heat insulating pads are provided. Among the three heat insulating pads, the two heat insulating pads located on two ends in a first direction X (i.e., an arrangement direction of the battery units 110) are defined as first heat insulating pads 201, and the remaining heat insulating pad is defined as a second heat insulating pad 202. Based on the above, a thickness d1 of each of the first heat insulating pads 201 may be greater than a thickness d2 of the second heat insulating pad 202. Accordingly, since the first heat insulating pads 201 are required to bear the heat of batteries in two adjacent battery units 110 and are required to bear more heat compared to the second heat insulating pad 202 in the middle, the safety of the battery apparatus may be further improved by thickening the first heat insulating pad 201.

As described above, the distinction between the first heat insulating pads 201 and the second heat insulating pad 202 requires arrangement of three or more heat insulating pads. Therefore, this embodiment may also be understood as, when the battery apparatus includes at least four battery units 110, in the arrangement direction of the battery units 110, the thickness of each of the heat insulating pads located on two ends is greater than the thickness of each of the rest of the heat insulating pads.

### Fourth embodiment

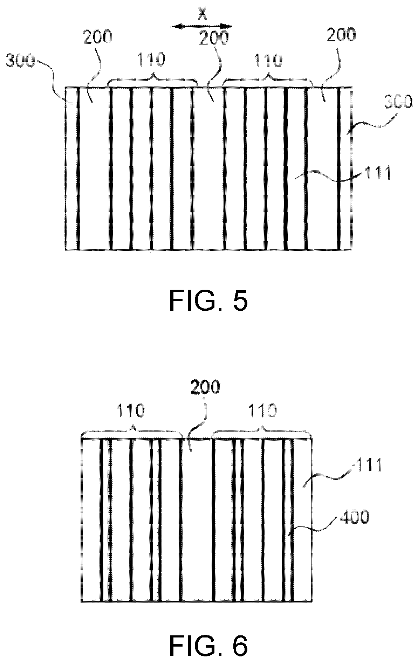

Based on the detailed description of the battery apparatus of the first embodiment provided by the disclosure, description of the fourth embodiment provided by the disclosure is stated as follows with reference to FIG. 5. Herein, a battery apparatus in the fourth embodiment adopts a design similar to that adopted by the battery apparatus in the first embodiment, and a difference between the battery apparatus in the fourth embodiment and the battery apparatus in the first embodiment is specifically described as follows.

As shown in FIG. 5, in this embodiment, the battery apparatus provided by the disclosure includes two battery units 110, and each of the battery units 110 includes four batteries 111. A heat insulating pad 200 is disposed between the adjacent two battery units 110. Herein, the battery apparatus provided by this disclosure further includes end plates 300, and the end plates 300 are disposed on two ends of the battery units 110. Based on the above, the heat insulating pads 200 may be disposed between largest surfaces of the end plates 300 and the adjacent battery units 110. Further, a material of the end plates 300 usually includes metal, which exhibits excellent thermal conductivity, such that the arrangement of the heat insulating pads 200 between the largest surfaces of the end plates 300 and the adjacent battery units 110 may prevent heat diffusion from occurring in the battery apparatus, and safety of other components in contact with the end plates 300 may also be improved.

### Fifth embodiment

Based on the detailed description of the battery apparatus of the first embodiment provided by the disclosure, description of the fifth embodiment provided by the disclosure is stated as follows with reference to FIG. 6. Herein, a battery apparatus in the fifth embodiment adopts a design similar to that adopted by the battery apparatus in the first embodiment, and a difference between the battery apparatus in the fifth embodiment and the battery apparatus in the first embodiment is specifically described as follows.

As shown in FIG. 6, in this embodiment, the battery apparatus provided by the disclosure includes two battery units 110, and each of the battery units 110 includes four batteries 111. A heat insulating pad 200 is disposed between the adjacent two battery units 110. Based on the above, a buffering pad 400 is disposed between adjacent two batteries 111 belonging to the same battery unit 110. That is, in each of the battery units 110, the batteries 111 contacting each other directly is provided, and the buffering pads 400 may also be disposed between other batteries 111. In this way, an influence brought by expansion between batteries 111 may be effectively alleviated, the balance between heat insulation and buffering may be achieved, and safety performance of the battery apparatus may be further improved.

In other embodiments, in the case that one battery unit 110 includes two, three, or five or more batteries 111, among these batteries 111 belonging to the same battery unit 110, one buffering pad 400 may be disposed between two batteries 111 in at least one pair of the adjacent two batteries 111, and buffering pads 400 may also be disposed between adjacent two batteries 111 in every pair.

### Sixth embodiment

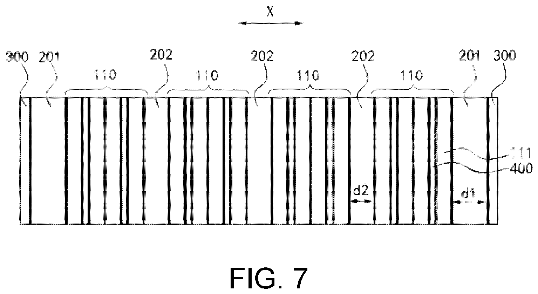

Based on the detailed description of the battery apparatus of each of the first embodiment to the fifth embodiment provided by the disclosure, description of the sixth embodiment provided by the disclosure is stated as follows with reference to FIG. 7. Herein, a battery apparatus in the sixth embodiment adopts a design similar to that adopted by the battery apparatus in each of the first embodiment to the fifth embodiment, and a difference between the battery apparatus in the sixth embodiment and the battery apparatus in each of the first embodiment to the fifth embodiment is specifically described as follows.

As shown in FIG. 7, in this embodiment, the battery apparatus provided by the disclosure includes four battery units 110, and each of the battery units 110 includes four batteries 111. A heat insulating pad is disposed between the adjacent two battery units 110. Herein, the battery apparatus further includes end plates 300, and the end plates 300 are disposed on two ends of the battery units 110. The heat insulating pads are disposed between largest surfaces of the end plates 300 and the adjacent battery units 110 as well. That is, the battery apparatus has a total of five heat insulating pads. Based on the above, the two heat insulating pads located on two ends in a first direction X are first heat insulating pads 201. That is, the heat insulating pads located between the largest surfaces of the battery units 110 and the end plates 300 are the first heat insulating pads 201. The rest of the heat insulating pads are defined as second heat insulating pads 202. A thickness d1 of each of the first heat insulating pads 201 is greater than a thickness d2 of each of the second heat insulating pads 202. Besides, a buffering pad 400 is disposed between adjacent two batteries 111 belonging to the same battery unit 110.

It should be noted that, the battery apparatus examples shown in the drawings and described in the specification are only a few examples of many types of battery assemblies that may adopt the principles of the disclosure. It should be clearly understood that the principles of the disclosure are by no means limited to any details or any components of the battery apparatus shown in the drawings or described in the specification.

For instance, the batteries 111, heat insulating pads 200, end plates 300, and buffering pads 400 shown in each of the drawings are exemplary only, and illustration thereof aims to show arrangement of the structures. The thickness relationships in the structures shown in the drawings do not have a limiting meaning.

In view of the foregoing, in the battery apparatus provided by the disclosure, a heat insulating pad is disposed between adjacent two battery units, and two batteries in at least a pair of adjacent two batteries belonging to the same battery unit contact each other with the largest surfaces of their own. Through the foregoing design, under the condition of allocation of the same battery module space, a sufficient installation space is provided for the heat insulating pads in the battery apparatus provided by the disclosure. That is, the thickness of the heat insulating pad is large, and thermal runaway which may lead to battery safety risks is thus prevented from occurring in batteries in the adjacent two battery units 110. Further, the safety risk of batteries resulted from generation of a large expansion force caused by direct contact among all batteries in the battery units is also prevented from occurring.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery apparatus, comprising at least two battery units (110), wherein each of the battery units (110) comprises at least two batteries (111); a heat insulating pad (200) is disposed between largest surfaces of the batteries (111) of each of the adjacent two battery units (110), and at least a pair of the adjacent two batteries (111) belonging to a same battery unit (110) contact each other with largest surfaces of the batteries (111),
wherein a thickness of each of the heat insulating pads (200) is at least 3 mm, and when thermal runaway occurs in a battery (111), the temperature of an adjacent battery (111) after heat insulation by the heat insulating pad (200) is less than 250°C.

2. The battery apparatus according to claim 1, wherein in each of the battery units (110), all of the adjacent batteries (111) contact each other with the largest surfaces of the batteries (111).

3. The battery apparatus according to claim 1, wherein each of the battery units (110) comprises three or more batteries (111), in each of the battery units (110), at least a pair of the adjacent batteries (111) contact each other with the largest surfaces of the batteries (111).

4. The battery apparatus according to claim 1, wherein in the same battery unit (110), at least two of the batteries (111) are parallel batteries, and all batteries (111) in the parallel batteries contact each other with the largest surfaces of the batteries (111).

5. The battery apparatus according to any one of claims 1-4, wherein the heat insulating pad (200) comprises:
a buffering frame (210), including a buffering material and having a frame-shaped structure; and
a heat insulating layer (220), disposed in the buffering frame (210).

6. The battery apparatus according to claim 5, wherein the buffering material comprises silica gel, and/or, the heat insulating layer (220) comprises aerogel.

7. The battery apparatus according to any one of claims 1-4, wherein the battery apparatus comprises two battery units (110), each of the battery units (110) comprises four batteries (111), and, in each of the battery units (110), all of the adjacent batteries (111) contact each other with largest surfaces of the batteries (111).

8. The battery apparatus according to any one of claims 1-4, wherein the battery apparatus comprises at least four the battery units (110), and the at least four the battery units (110) are arranged in a first direction (X), and in the first direction (X), a thickness (d1) of each of the heat insulating pads (200) located at two ends is greater than a thickness (d2) of each of the rest of the heat insulating pads (200).

9. The battery apparatus according to any one of claims 1-4, further comprising end plates (300), wherein the end plates (300) are disposed on two ends of the battery units (110), and the heat insulating pads (200) are disposed between opposite surfaces of the end plates (300) and the adjacent battery units (110).

10. The battery apparatus according to claim 9, wherein a material of the end plates (300) comprises metal.

11. The battery apparatus according to any one of claims 1-4, wherein a pad (400) is disposed between at least a pair of the adjacent two batteries (111) belonging to the same battery unit (110).

12. The battery apparatus according to claim 11, wherein the pad (400) is disposed between each pair of the adjacent two batteries (111) belonging to the same battery unit (110).

13. The battery apparatus according to any one of claims 1-4, wherein the battery apparatus comprises two battery units (110), and each of the battery units (110) comprises four batteries (111), the heat insulating pad (200) is disposed between the adjacent two battery units (110), a pad (400) is disposed between adjacent two batteries (111) belonging to the same battery unit (110).

14. The battery apparatus according to any one of claims 1-4, wherein the battery apparatus comprises four battery units (110) and end plates (300), each of the battery units (110) comprises four batteries (111), the end plates (300) are disposed on two ends of the four battery units (110), heat insulating pads (200) are disposed between largest surfaces of the end plates (300) and the adjacent battery units (110) as well, the four battery units (110) are arranged in a first direction (X), and in the first direction (X), a thickness (d1) of each of the heat insulating pads (200) located at two ends is greater than a thickness (d2) of each of the rest of the heat insulating pads (200).

15. The battery apparatus according to claim 1, wherein the battery apparatus comprises a battery module or a battery pack.
